# EUROPEAN PATENT SPECIFICATION

(11) **EP 3 086 658 B1**
(45) Date of publication and mention of the grant of the patent: **15.09.2021**
(21) Application number: 14818998.8
(22) Date of filing: 22.12.2014
(51) Int. Cl.: A23L 3/18

(54) **METHOD AND ARRANGEMENT FOR STERILIZING EDIBLE NUTS**
VERFAHREN UND ANORDNUNG ZUM STERILISIEREN VON SCHALENFRÜCHTEN
PROCÉDÉ ET AGENCEMENT POUR LA STÉRILISATION DE NOIX COMESTIBLES

(30) Priority: 23.12.2013 DK 201300716
(43) Date of publication of application: 02.11.2016
(73) Proprietor: SPX Flow Technology Danmark A/S, 8600 Silkeborg (DK)
(72) Inventor: RIIS, Claus, DK-8600 Silkeborg (DK); POULSEN, Ole, DK-7442 Engesvang (DK)
(74) Representative: Nordic Patent Service A/S
(86) International application number: PCT/EP2014/078966
(87) International publication number: WO 2015/097138

(56) References cited:
- EP-A1- 2 368 436
- WO-A1-2013/171336
- FR-A1- 2 674 100
- GB-A- 1 203 018
- US-A- 6 066 351
- US-A1- 2005 031 751
- US-A1- 2006 093 717
- IVARSSON C: "Nut pasteurization. Minimising impact on appearance, colour and flavour", AGRO FOOD INDUSTRY HI-TECH, vol. 22, no. 3, 1 May 2011 (2011-05-01), pages 22-24, XP009159366, ISSN: 1722-6996
- None

## Description

### FIELD

The present invention relates to a method for sterilizing edible nuts such as e.g. hazelnuts, almonds, peanuts, or pine nuts, an arrangement for sterilizing edible nuts and a production plant comprising an arrangement for sterilizing edible nuts according to the invention.

### BACKGROUND

In recent years there has, in particular in the USA, been an increased focus on the bacteriological safety of low moisture foods such as nuts. Such foods have until recently been considered safe because they do not support the growth of microorganisms. However, in some cases it has been shown that surface contamination with microorganisms such as e.g. salmonella, which is pathogenic even at low doses (M.D. Danyluket et al., J. Food Prot., 70, pp. 820-827 (2007)), can lead to bacteriological infestations in humans even at levels of surface contamination generally recognized as safe. This has led the USDA to issue requirements (September 2007) demanding the sterilization of almonds prior to sale.

It is a general problem of the methods of sterilization currently known that such methods of sterilization, which can serve to protect the taste of edible nuts, generally may require treatment chemical reactants such as ethylene oxide or propylene oxide, both of which are recognized carcinogens, whereas heat treatment such as pasteurization may lead to changes to the taste of such edible nuts or to changes to their mouth feel, e.g. by imparting a "cooked feeling" to the nut when perceived in the mouth of a consumer, which is generally unwanted in food intended to be consumed raw or uncooked.

For this reason many methods of heat sterilization currently known in the art have focused on low energy transfer and short treatment times to retain the organoleptic perception of such edible nuts to the largest possible extent.

In some cases it is however desirable to sterilize the edible nuts thoroughly such that the nuts are sterilized not just on the surface but into and including its kernel.

The currently known whole-nut sterilizing processes rely mainly on batch sterilization, such as autoclave or in-can retort sterilization, basically cooking the nuts to a desired kernel temperature, thereby sterilizing the nuts. Batch sterilization however leads to taste changes and other undesired organoleptic problems. Further, batch processes are generally characterized by an undesirable energy economy as the energy used to heat the edible nuts cannot easily be recovered after the batch treatment. Attempts to build continuous whole-nut sterilization systems have so far failed to adequately overcome the drawbacks of batch processes, in particular at ambient pressure due to an inadequate transfer of heat from the process equipment to the edible nuts.

In WO 03/043665 is described a method and system for a reduction of a bioburden, adapted to whole-nut sterilization of almonds, in a sub-atmospheric saturated steam environment, said method for reducing bioburden comprising: a) placing a material to be treated into a chamber; b) selecting a desired temperature T1, wherein said desired temperature T1 is based on the material being treated; c) determining a target pressure P1, wherein said target pressure P1 provides a saturated steam environment in said chamber at said desired temperature T1; d) creating a vacuum in said chamber, e) introducing steam into said chamber until a pressure equal to said target pressure P1 is achieved, thus indicating that said chamber has reached said target temperature T1; and f) maintaining the chamber at said temperature T1 and pressure P1 for a period time sufficient for said bioburden reduction. While whole-nut sterilization of almonds using the above method is possible, the method does neither allow for continuous operation nor for a recovery of at least a part of the energy used in the sterilization process.

WO 2013171336 A1 describes a vapor phase system for pasteurizing or sterilizing low-moisture foods, such as nuts, seeds, grains wherein the foods are pre-heated, or sterilized in a gas, and cooled, characterized in that the gas pasteurizing or sterilizing the foods contains water vapor and one or more further gasses, preferably air. WO 2013010037 A1 discloses a batch method for surface sterilizing nuts or seeds wherein a sterilization step can be a heat step e.g. steam sterilization and further comprising a blanching process wherein the food is exposed to hot water (e.g. boiling water), removed after a brief timed interval, and finally cooled by exposure to cold water.

US 20060093717 discloses a continuous thermal process for treating a flow comprising coarse food particles and a watery transport fluid, wherein the food particles, moving freely and with a volume percentage of 20-60% based on the total flow, are passed, by means of the transport fluid, into a heat-up section and subsequently through a hold-warm section, wherein in the heat-up section the transport fluid is heated, under turbulent flow, to a temperature T 1 of 65-150°C, after which the transport fluid in the hold-warm section is held at a temperature T2, with (T1-T2) being at most 20°C.

WO 2013/171336 A1 relates to a method of and system for surface pasteurization or sterilization of low-moisture particulate foods, such as nuts. The method involves treatment of the food in humid air and in a preheating step the food is preheated to a temperature of 5°C below the condensation temperature and preferably a temperature 1 to 20°C above the compensation temperature of the water vapor in the humid air. The preheating step is performed to reduce desorption of water so that less foreign water needs to be absorbed during the pasteurization or sterilization process. Subsequently, the food is optionally dried, and cooled.

The current inventors therefore have realized the need for a continuous or semi-continuous sterilization process for edible nuts which allows for whole-nut sterilization while overcoming the currently known limitations of the prior art.

### SUMMARY OF THE INVENTION

The present invention discloses a method of sterilizing whole nuts comprising pre-cooking said nuts in a pre-cooking unit (1) to a core temperature T1 at a pressure P1 for a time t1; transferring said nuts to a sterilizing line (2), said sterilizing line (2) configured to transport said nuts through a sequence of process devices, said sequence of process devices comprising a reservoir (3), at least one feed pump (4), a consecutive arrangement of heat exchangers (5,6,7), and a filling machine (8) and/or an aseptic tank (9); wherein said nuts are mixed in said reservoir (3) with a carrier liquid, said carrier liquid at least comprising water, thereby forming a pumpable, slurry-like mixture of nuts and carrier liquid; said slurry-like mixture is pumped using said at least one feed pump (4) through said consecutive arrangement of heat exchangers (5,6,7), wherein a first arrangement of heat exchangers (5) heats said carrier liquid to a sterilizing temperature T2 and, when said sterilizing temperature T2 is reached, said sterilizing temperature T2 is maintained essentially constant by a second arrangement of heat exchangers (6) for a predetermined sterilization time t2 while said nuts are being sterilized, after which said slurry-like mixture is pumped through a third arrangement of heat exchangers (7) to cool said slurry-like mixture to a storage temperature T3; and said slurry-like mixture having said storage temperature T3 is pumped to said filling machine (8) for filling, or to said aseptic tank (9) to be held for later filling.

In an embodiment said first (5), said second (6), and said third (7) arrangement of heat exchangers respectively comprise at least one heat exchanger chosen from between a scrape surface heat exchanger, a tubular heat exchanger, a shell and tube heat exchanger, a plate heat exchanger, a plate and shell heat exchanger, an adiabatic wheel heat exchanger, and a plate fin heat exchanger or a combination thereof.

In a further embodiment said first, said second, and said third arrangement of heat exchangers (5,6,7) respectively comprise at least one scrape surface heat exchanger.

In a further embodiment said second arrangement of heat exchangers (6) comprises at least one holding conduit, preferably a tubular holding tube.

In a further embodiment said second arrangement of heat exchangers (6) comprises an alternating arrangement of holding conduits (61,63), preferably tubular holding tubes, and heat exchangers (62,63), preferably scrape surface heat exchangers.

In a preferred embodiment said second arrangement of heat exchangers (6) comprises an alternating arrangement of tubular holding tubes (61,63) and scrape surface heat exchangers (62, 64).

In one embodiment said core temperature T1 is in the temperature range between 55°C to 100°C, in particular between 70°C to 95°C.

In a further embodiment said sterilizing temperature T2 is between 100°C to 150°C, preferably between 110°C to 140°C, most preferably between 120°C to 130°C.

In a further embodiment said sterilization time t2 is between 1 to 10 minutes, preferably between 2 to 8 minutes, most preferably between 3 to 6 minutes.

In a preferred embodiment said sterilization temperature T2 is between 120°C to 140°C and said sterilization time t2 is between 1 to 6 minutes.

In one embodiment said carrier liquid comprises water and optionally at least one further component selected from a list comprising stabilizers, starch stabilizers, sugars, salts, flavor additives, flour, and gum.

In a preferred embodiment said carrier liquid comprises water, starch stabilizers, flours, gums, salts and sugars.

Further is herein disclosed an arrangement for sterilizing whole nuts comprising a pre-cooking unit (1), and a sterilizing line (2); said pre-cooking unit (1) configured to pre-cook said nuts to a core temperature T1 at a pressure P1 for a time t1; said sterilizing line (2) configured to sterilize said nuts by transporting said nuts through a sequence of process devices, said sequence of process devices comprising in order of passage of said nuts through said sterilizing line (2), a reservoir (3), at least one feed pump (4), a consecutive arrangement of heat exchangers (5,6,7), and a filling machine (8) and/or an aseptic tank (9); said arrangement further comprising a control unit operatively connected to said pre-cooking unit (1) and said sterilizing line (2), said control unit configured to control said pre-cooking unit (1) and said sterilizing line (2) for pre-cooking said nuts in said pre-cooking unit (1) to a core temperature T1 at a pressure P1 for a time t1; and sterilizing said nuts in said sterilizing line (2) by mixing said nuts in said reservoir (3) with a carrier liquid, said carrier liquid at least comprising water, thereby forming a pumpable, slurry-like mixture of nuts and carrier liquid; pumping said slurry-like mixture using said at least one feed pump (4) through said consecutive arrangement of heat exchangers (5,6,7), where in a first arrangement of heat exchangers (5) said carrier liquid is heated to a sterilizing temperature T2 and, when said sterilizing temperature T2 is reached, said sterilizing temperature T2 is maintained essentially constant by a second arrangement of heat exchangers (6) for a predetermined sterilization time t2 while said nuts are being sterilized, after which said slurry-like mixture is pumped through a third arrangement of heat exchangers (7) wherein said slurry-like mixture is cooled to a storage temperature T3; and pumping said slurry-like mixture having said storage temperature T3, to said filling machine (8) for filling, or to said aseptic tank (9) to be held for later filling.

In a final embodiment of the invention is disclosed a production plant comprising an arrangement according to the above disclosed embodiments.

Accordingly there is thereby provided an energy efficient method of whole-nut sterilization of a variety of edible nuts having the added advantage of preserving the organoleptic perception by preventing taste changes to the sterilized nuts such as e.g. the nuts attaining a "cooked" taste rather than a "raw" taste. Further, by using the method of the invention a higher production capacity is achieved while retaining the capacity to sterilize the centers of the nuts characteristic of the prior art batch processes.

### BRIEF DESCRIPTION OF THE DRAWINGS

Figure 1 shows a diagrammatic representation of a process system for executing the method of the current invention.

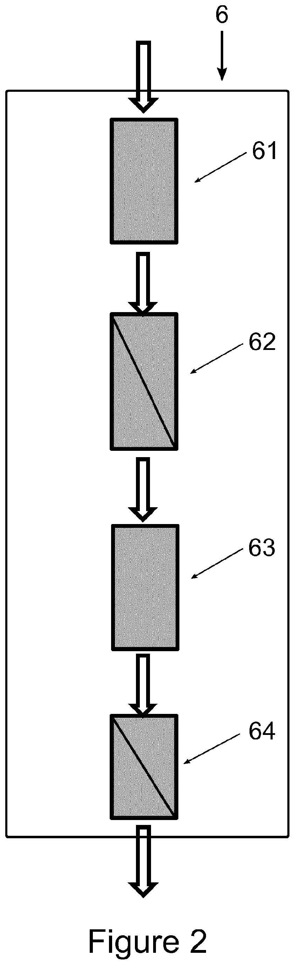

Figure 2 shows a diagrammatic representation of a sequence of holding tubes and heat exchangers advantageously used in the execution of the method of the current invention.

### DETAILED DESCRIPTION

The current invention relates to methods of sterilizing edible nuts and a system for sterilizing edible nuts, said method permitting continuously or semi-continuously sterilization of nuts, preferably said method permitting continuously or semi-continuously sterilization of nuts at ambient or elevated pressures.

In the context of the present invention edible or culinary nuts is to be understood broadly and in an everyday manner. Most people perceive the term nut to cover a large range of edible fruits or seeds, which share a certain range of visual and taste characteristics. Biologically, edible or culinary nuts cover *true,* or biological, nuts (e.g. hazelnuts) which are dry, hard-shelled, uncompartmented fruit that do not split on maturity to release seeds; *drupe nuts* which refer to a stone, or pit, enclosed in a fleshy fruit, the stone containing a seed (e.g. almonds or coconuts); *gymnosperm seeds* which refer to naked seeds with no enclosure (e.g. pine nuts); or *angiosperm seeds* which are unenclosed seeds within a larger fruit (e.g. peanuts). Throughout the text of the present disclosure the terms nut, edible nut, or culinary nut are used without discriminating between *true nuts, drupe nuts, gymnosperm seeds, or angiosperm seeds* as long as a member of the general public would consider a particular biological specimen as falling under the general term nut, edible nut, or culinary nut.

In particular, under the terms nut, edible nut, or culinary nut, the following *true nuts, drupe seeds, gymnosperm seeds,* and *angiosperm seeds,* are to be included: Hazelnut, including *corylus avellana, corylus Americana, corylus cornuta, corylus maxima,* almond *(prunus dulcis),* apricot seed *(prunus armeniaca),* peach seed *(prunus persica),* cashew nut *(anacardium occidentale),* pistachio nut *(pistachio vera L.),* walnut *(juglans spp.),* including *juglans nigra, juglans cinerea, juglans regia, juglans aitlanthifolia;* pine nut *(Pinus* spp.*),* including *pinus pinea, pinus gerardiana, pinus edulis, pinus koraiensis, pinus cembroides, pinus monophylla,* Brazil nut *(bertholletia excelsa),* Macadamia nut *(Macadamia spp.),* including *macadamia tetraphylla, macadamia integrifolia,* peanut *(arachis hypogaea),* and nutmeg *(Myristica spp.),* including *myristica* fragrans, *myristica argentea, myristica malabarica.* In a preferred embodiment the nut of the present invention is a hazelnut, an almond, a pistachio nut, a pine nut, or a peanut. In a most preferred embodiment of the present invention the nut is a peanut.

Throughout the present disclosure the term nut is further used without reference to the presence or absence of a shell, in particular without reference to the presence or absence of a nutshell. It shall be understood that in the current context nuts are de-shelled, and hence readily edible, and accordingly are used in the method of the current invention as de-shelled entities.

As will be disclosed in further detail below, the current invention is preferentially limited by the size of the de-shelled nuts which are to be sterilized.

In order for the method of the current invention to achieve its maximum potential, the nuts for use with the present method cannot be too large. In the method of the present invention nuts are mixed with a carrier liquid comprising water to form a slurry-like mixture which can be transported through the process system by pumping. Hence the nuts for use in the present invention must be able to form a slurry-like mixture which is pumpable with said carrier liquid comprising water. Coconuts e.g. by this definition are too large for inclusion into the method of the present invention and are hence considered as nuts falling outside the scope of the current disclosure.

Preferably the nuts of the present invention have at least one characteristic length which does not exceed 3 cm, preferably does not exceed 2 cm, more preferably does not exceed 1 cm. As an example, Brazil nuts (or para-nuts), biologically a drupe seed, are elongated in shape with a length of about 4-5 cm and a cross-sectional diameter of about 1-1.5 cm. Such nuts will align preferentially with the flow direction along their longest axis when mixed with carrier liquid and pumped; hence their pumping properties will preferentially be determined by the cross-sectional diameter which, in the present case of a Brazil nut, is sufficiently small to permit adequate pumping.

It is preferred that the weight ratio of nut to carrier liquid is such that a slurry-like mixture of nut and carrier liquid is created, preferably such that the weight of nut constitutes at most 60% by weight, at most 50% by weight, preferably at most 40 by weight, more preferably at most 30% by weight, and most preferably at most 25% by weight of the total mass of the nut-carrier liquid mixture. Mixing nuts and carrier liquid in such ratios assure an improved pumping profile and an improved energy efficacy of the system executing the method of the invention. Preferably nut constitutes between 20-30% by weight of the total mass of said slurry-like mixture.

In general, edible nuts have a very high content of fat wherefore most edible nuts have a density which is lower than that of water. In a sedimentation tank comprising a slurry-like mixture nuts and carrier liquid, such nuts will therefore partition to the surface of the carrier liquid, when said slurry-like mixture is pumped into such a tank. The term slurry-like is therefore used descriptively for the pumpable mixture of nuts and carrier liquid, but cannot be construed to mean that the pumpable mixture of nuts and carrier liquid constitute a true slurry. A minor number of edible nuts have a density slightly higher than water and these will partition to the bottom of the carrier liquid in a sedimentation tank. Also these nuts may form a pumpable slurry-like mixture with said carrier liquid.

Another benefit of using nuts conferring to the above definitions in the method of the current disclosure is; that the times necessary for processing and sterilizing such nuts in the system executing the method of the present invention become comparable, and hence process systems for use with the method of the invention can be standardized easily. Due however to the potential heat damage to the nuts, such as e.g. heat damage to the unsaturated fats contained in the nuts in terms of e.g. trans-isomerization or oxidation, individually adapted sterilization times will be necessary, said individually adapted sterilization times depending on the particular nut to be sterilized. However, when the nuts intended for a particular plant or process system are comparable in size, their process times will be comparable and hence plant construction will be simplified and made economically more feasible.

The skilled person will realize that also nuts, which have been reduced to a smaller size than whole-nut, may be treated using the methods of the current invention. While such partial nut sterilization is possible, the greatest advantage of the present method is its applicability to whole nuts.

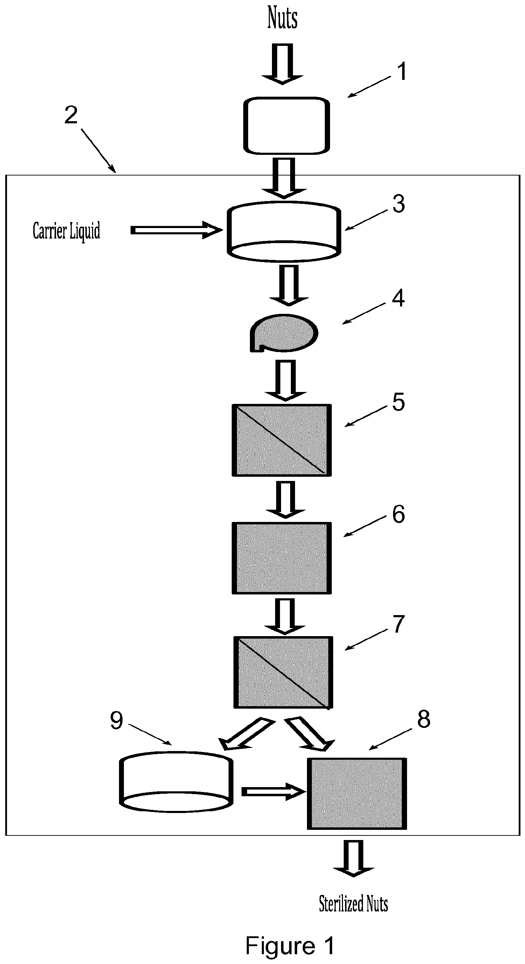

Referring now to the figure 1; nuts, preferably whole nuts, are fed in a first process step to a pre-cooking unit (1) and hydrated at a pressure P1 for a period of time t1 to a pre-established core temperature T1.

The core temperature T1 after hydration shall be in the temperature range between 55°C to 100°C, preferably 65°C to 95°C, more preferably 70°C to 90°C, most preferably 75°C to 85°C. In a particular embodiment the core temperature T1 after hydration is in the temperature range between 70°C to 95°C.

The pressure P1 is preferably ambient pressure but in some particular cases it may be preferable to apply a pressure difference to ambient pressure during hydration. Hence P1 in its broadest embodiment can be ambient pressure ± 10%. When the method of the current invention is operated continuously, P1 will always be, or be close to, ambient pressure, but in semi-continuously operation, P1 in the pre-cooking unit (1) may be adjusted within the above limits.

The pre-cooking time t1 is variable and dependent on the particular nut to be treated. Usually the pre-cooking time t1 is between 30 minutes to 6 hours, but this is not limiting on the method of the current invention. The skilled person will know that choosing a particular pre-cooking time for a particular nut will lead to a given core temperature T1, and reversibly deciding to obtain a given core temperature T1 will determine the length of the pre-cooking time t1. In fact, while the core temperature T1 is the determining factor for the sterilization efficacy, the pre-cooking time t1 will be the preferred input for the system executing the method of the current invention when installed in a production plant.

The pre-cooking unit (1) can be a continuous heating unit, e.g. a revolving spiral cooker, however, equally preferred is a conventional batch cooking unit. In one embodiment pre-cooking is effectuated with steam at ambient pressure. When a batch cooking unit is used, a preferential embodiment is pre-cooking with hot water at the desired core temperature T1, preferably at ambient pressure. Usually it will be advantageous to separate pre-cooked nuts from the water used in the pre-cooking step, e.g. by filtering or sieving. The used water may then be recycled in a next pre-cooking cycle or transferred for further use at other locations inside or outside the production plant comprising the system of executing the method of the current disclosure.

In a second process step the pre-cooked nuts are transferred from the pre-cooking unit (1) into a sterilizing line (2) which operates in a continuous mode.

The nuts are received in the sterilizing line (2) and transferred firstly into a reservoir (3), said reservoir (3) preferably comprising a balance tank or a feed tank. In the reservoir (3) the nuts are mixed with a carrier liquid to form a pumpable, slurry-like, mixture of nuts and carrier liquid, and wherein the weight fraction of nuts to carrier liquid is as described above. The carrier liquid may be cold or tempered to ambient temperature upon first contact with the pre-cooked nuts, but may also have been heated prior to first contact with the nuts in the reservoir (3). When pre-heated the carrier liquid is preferably heated to a temperature at or above said core temperature T1 prior to first contact with the nuts in said reservoir (3).

A feed pump (4), or if needed a plurality of feed pumps (4), now pumps said slurry-like mixture through a consecutive arrangement of heat exchangers (5,6,7); which in a first arrangement of heat exchangers (5) heats the carrier liquid to a sterilizing temperature T2. Once said sterilizing temperature T2 is reached, said sterilizing temperature T2 is maintained essentially constant during passage of a second arrangement of heat exchangers (6) for a predetermined sterilization time t2 while the nuts are being sterilized. When said sterilization time t2 has passed, said slurry-like mixture is transferred to a third arrangement of heat exchangers operating to cool said slurry-like mixture during passage to a storage temperature T3. Upon attaining said storage temperature T3, said slurry-like mixture is transferred to a filling machine (8) or held in an aseptic tank (9) for later filling.

The skilled person will know that filling may cover dry storage and wet storage of nuts in a variety of containers. The manner of operation of said filling machine (8) or said aseptic tank (9) does not form a part of the present invention, nor does the nature of the container. A separation unit for separating carrier liquid from nuts may be inserted into said sterilization line after said third arrangement of heat exchangers (7) but before respectively at least one of, or both of, said filling machine (8) or said aseptic tank (9), should dry filling or dry storage be desired.

Heat exchangers suitable for use with the present invention can be scrape surface heat exchangers, tubular heat exchangers, shell and tube heat exchangers, plate heat exchangers, plate and shell heat exchangers, adiabatic wheel heat exchangers, plate fin heat exchangers. Preferably heat exchangers suitable for use with the present invention are scrape surface heat exchangers, tubular heat exchangers, and/or plate heat exchangers; but most preferably scrape surface heat exchangers and/or tubular heat exchangers.

In one embodiment, said first, said second, and said third arrangement of heat exchangers (5,6,7) respectively comprises at least one scrape surface heat exchanger.

In a further embodiment, said second arrangement of heat exchangers (6) comprises at least one holding conduit (61,63), preferably a tubular holding tube.

In a preferred embodiment, said second arrangement of heat exchangers (6) comprises an alternating arrangement of holding conduits (61,63), preferably tubular holding tubes, and heat exchangers (61,63), preferably scrape surface heat exchangers. In an even more preferred embodiment, said second arrangement comprises an alternating arrangement of tubular holding tubes (61,63) and scrape surface heat exchangers (62,64).

It is preferable that said sterilizing line operates continuously, e.g. such that said feed pump (4) or if needed, a plurality of feed pumps (4), effectuates said transfer in a continuous manner e.g. by pumping said slurry-like mixture through a continuous conduit system permitting the passage by said slurry-like mixture through said consecutive arrangement of heat exchangers (5, 6, 7) in the consecutive order described above and into said filling machine (8) or said aseptic tank (9). If necessary, intermissions or discontinuations in the continuous process stream may be introduced under the proviso that such intermissions are short.

The sterilizing temperature T2 is between 100°C to 150°C, preferably between 110°C to 140°C, most preferably between 120°C to 130°C. The sterilization time t2 is between 1 to 10 minutes, preferably between 2 to 8 minutes, most preferably between 3 to 6 minutes. In a particular embodiment of the invention, the sterilization temperature T2 is between 120°C to 140°C and the sterilization time t2 is between 1 to 6 minutes. Said storage temperature T3 is preferably ambient temperature, but may range within 0°C to 50°C, but preferably within 5°C to 45°C.

A carrier liquid useful with the method disclosed herein shall comprise water and additionally may comprise stabilizers, in particular starch stabilizers, sugars, salts, flavor additives, flour, and gum. In a preferred embodiment the carrier liquid comprises water, starch stabilizers, flours, gums, salts and sugars.

As stabilizers can be used thickeners and gelling agents. In particular thickeners and gelling agents such as starch, gums, pectin, gelatin, polysaccharide gum, agar and carrageenan, are of interest but also other thickening agents may be used like CMC, collagen, rehan, vegetable gums, and proteins

Typical starch stabilizers can be native, hydrolyzed or otherwise modified starch's, in particular based on maize, wheat and rice starch, but also based on acorns, arrowroot, arracacha, bananas, barley, breadfruit, buckwheat, canna, cola casia, Fecula, katakuri, kudzu, malanga, millet, oats, oca, Polynesian arrowroot, sago, sorghum, potatoes, sweet potatoes, rye, taro, chestnuts, water chestnuts, yams, and beans, such as favas, lentils, mung beans, peas, and chickpeas. Particular preferred are starch stabilizers comprising at least maize, wheat, or rice starch.

Typical flours can be wheat, maize, rye, and rice flour, but also possible are acorn, almond, amaranth, atta, bean, buckwheat, cassava, chestnut, chickpea, chuño, coconut, corn, cornstarch, glutinous rice, hemp, maida, mesquite, noodle, peasemeal, peanut, potato starch flour, sorghum, spelt, tapioca, or teff. Particular preferred are wheat, maize, rye and rice flour. Also preferred is nut flour, such as almond or peanut flour.

Typical gums can be guar gum, locust bean gum, xanthan gum, gum anima, gum Arabic, cassia gum, dammar gum, gellan gum, glucomannan, kauri gum, myrrh gum, spruce gum, welan gum and tragacanth gums. Particular preferred are guar gum, locust bean gum, xanthan gum.

### CLOSING COMMENTS

Throughout the disclosure of the present invention, process elements have been mentioned in the order in which they appear along the process line of the process system of the present invention. Conduits necessary to contain and conduct the flow of said slurry-like mixture of nuts and carrier liquid have not been detailed. Such conduits however form part of any process system comprising the above described process elements and the skilled person will know to employ conduits as necessary to contain and conduct the flow of said slurry-like mixture.

The term "comprising" as used in the claims does not exclude other elements or steps. The term "a" or "an" as used in the claims does not exclude a plurality.

Although the present invention has been described in detail for the purpose of illustration, it is understood that such detail is solely for that purpose, and that variations can be made therein by those skilled in the art without departing from the scope of the invention.

## Claims

1. A method of sterilizing whole nuts comprising
a. pre-cooking said nuts in a pre-cooking unit (1) to a core temperature T1 at a pressure P1 for a time t1, wherein said core temperature T1 is in the temperature range between 55°C to 100°C;
b. transferring said nuts to a sterilizing line (2), said sterilizing line (2) configured to transport said nuts through a sequence of process devices, said sequence of process devices comprising a reservoir (3), at least one feed pump (4), a consecutive arrangement of heat exchangers (5,6,7), and a filling machine (8) and/or an aseptic tank (9); wherein
- said nuts are mixed in said reservoir (3) with a carrier liquid, said carrier liquid at least comprising water, thereby forming a pumpable, slurry-like mixture of nuts and carrier liquid;
- said slurry-like mixture is pumped using said at least one feed pump (4) through said consecutive arrangement of heat exchangers (5,6,7), wherein a first arrangement of heat exchangers (5) heats said carrier liquid to a sterilizing temperature T2 and, when said sterilizing temperature T2 is reached, said sterilizing temperature T2 is maintained essentially constant by a second arrangement of heat exchangers (6) for a predetermined sterilization time t2 while said nuts are being sterilized, after which said slurry-like mixture is pumped through a third arrangement of heat exchangers (7) to cool said slurry-like mixture to a storage temperature T3; and
- said slurry-like mixture having said storage temperature T3 is pumped to said filling machine (8) for filling, or to said aseptic tank (9) to be held for later filling.

2. The method according to claim 1 wherein said core temperature T1 is in the temperature range between 70°C to 95°C.

3. The method according to claims 1 or 2 wherein said sterilizing temperature T2 is between 100°C to 150°C, preferably between 110°C to 140°C, most preferably between 120°C to 130°C.

4. The method according to any of the claims 1 to 3 wherein said sterilization time t2 is between 1 to 10 minutes, preferably between 2 to 8 minutes, most preferably between 3 to 6 minutes.

5. The method according to any of the claims 1 to 4 wherein said sterilization temperature T2 is between 120°C to 140°C and said sterilization time t2 is between 1 to 6 minutes.

6. The method according to any of the claims 1 to 5 wherein said carrier liquid comprises water and optionally at least one further component selected from a list comprising stabilizers, starch stabilizers, sugars, salts, flavor additives, flour, and gum.

7. The method according to any of the claims 1 to 6 wherein said carrier liquid comprises water, starch stabilizers, flours, gums, salts and sugars.

8. An arrangement for sterilizing whole nuts comprising a pre-cooking unit (1), and a sterilizing line (2); said pre-cooking unit (1) configured to pre-cook said nuts to a core temperature T1 at a pressure P1 for a time t1, wherein said core temperature T1 is in the temperature range between 55°C to 100°C; said sterilizing line (2) configured to sterilize said nuts by transporting said nuts through a sequence of process devices, said sequence of process devices comprising in order of passage of said nuts through said sterilizing line (2), a reservoir (3), at least one feed pump (4), a consecutive arrangement of heat exchangers (5,6,7), and a filling machine (8) and/or an aseptic tank (9); said arrangement further comprising a control unit operatively connected to said pre-cooking unit (1) and said sterilizing line (2), said control unit configured to control said pre-cooking unit (1) and said sterilizing line (2) for:
a. pre-cooking said nuts in said pre-cooking unit (1) to a core temperature T1 at a pressure P1 for a time t1, wherein said core temperature T1 is in the temperature range between 55°C to 100°C; and
b. sterilizing said nuts in said sterilizing line (2) by
- mixing said nuts in said reservoir (3) with a carrier liquid, said carrier liquid at least comprising water, thereby forming a pumpable, slurry-like mixture of nuts and carrier liquid;
- pumping said slurry-like mixture using said at least one feed pump (4) through said consecutive arrangement of heat exchangers (5,6,7), where in a first arrangement of heat exchangers (5) said carrier liquid is heated to a sterilizing temperature T2 and, when said sterilizing temperature T2 is reached, said sterilizing temperature T2 is maintained essentially constant by a second arrangement of heat exchangers (6) for a predetermined sterilization time t2 while said nuts are being sterilized, after which said slurry-like mixture is pumped through a third arrangement of heat exchangers (7) wherein said slurry-like mixture is cooled to a storage temperature T3; and
- pumping said slurry-like mixture having said storage temperature T3, to said filling machine (8) for filling, or to said aseptic tank (9) to be held for later filling.

9. An arrangement according to claim 8 wherein said first (5), said second (6), and said third (7) arrangement of heat exchangers respectively comprise at least one heat exchanger chosen from between a scrape surface heat exchanger, a tubular heat exchanger, a shell and tube heat exchanger, a plate heat exchanger, a plate and shell heat exchanger, an adiabatic wheel heat exchanger, and a plate fin heat exchanger, or a combination thereof.

10. An arrangement according to either claim 8 or claim 9 wherein said first, said second, and said third arrangement of heat exchangers (5,6,7) respectively comprise at least one scrape surface heat exchanger.

11. An arrangement according to any of the claims 8 to 10 wherein said second arrangement of heat exchangers (6) comprises at least one holding conduit (61,63), preferably a tubular holding tube.

12. An arrangement according to any of the claims 8 to 11 wherein said second arrangement of heat exchangers (6) comprises an alternating arrangement of holding conduits (61,63), preferably tubular holding tubes, and heat exchangers (62,63), preferably scrape surface heat exchangers.

13. An arrangement according to any of the claims 8 to 12 wherein said core temperature T1 is in the temperature range between 70°C to 95°C.

14. An arrangement according to any of the claims 8 to 13 wherein said sterilizing temperature T2 is between 100°C to 150°C, preferably between 110°C to 140°C, most preferably between 120°C to 130°C.

15. An arrangement according to any of the preceding claims 8 to 14 wherein said sterilization time t2 is between 1 to 10 minutes, preferably between 2 to 8 minutes, most preferably between 3 to 6 minutes.

## Patentansprüche

1. Verfahren zum Sterilisieren ganzer Nüsse, umfassend
a. Vorkochen der Nüsse in einer Vorkocheinheit (1) für eine Zeit t1 bei einem Druck P1 auf eine Kerntemperatur T1, wobei die Kerntemperatur T1 im Temperaturbereich zwischen 55 °C und 100 °C liegt;
b. Überführen der Nüsse zu einer Sterilisierstrecke (2), wobei die Sterilisierstrecke (2) konfiguriert ist, um die Nüsse durch eine Abfolge von Verfahrensvorrichtungen zu transportieren, wobei die Abfolge von Verfahrensvorrichtungen ein Reservoir (3), mindestens eine Förderpumpe (4), eine aufeinanderfolgende Anordnung von Wärmetauschern (5, 6, 7) und eine Abfüllmaschine (8) und/oder einem aseptischen Tank (9) umfasst; wobei
- die Nüsse in dem Reservoir (3) mit einer Trägerflüssigkeit gemischt werden, wobei die Trägerflüssigkeit mindestens Wasser umfasst, wodurch eine pumpbare, schlämmeartige Mischung aus Nüssen und Trägerflüssigkeit gebildet wird;
- die schlämmeartige Mischung unter Verwendung der mindestens einen Förderpumpe (4) durch die aufeinanderfolgende Anordnung von Wärmetauschern (5, 6, 7) gepumpt wird, wobei eine erste Anordnung von Wärmetauschern (5) die Trägerflüssigkeit auf eine Sterilisiertemperatur T2 erwärmt und, wenn die Sterilisiertemperatur T2 erreicht ist, die Sterilisiertemperatur T2 durch eine zweite Anordnung von Wärmetauschern (6) für eine vorab festgelegte Sterilisierzeit t2 im Wesentlichen konstant gehalten wird, während die Nüsse sterilisiert werden, woraufhin die schlämmeartige Mischung durch eine dritte Anordnung von Wärmetauschern (7) gepumpt wird, um die schlämmeartige Mischung auf eine Lagertemperatur T3 zu kühlen; und
- die schlämmeartige Mischung mit der Lagertemperatur T3 zum Abfüllen in die Abfüllmaschine (8) oder in den aseptischen Tank (9) gepumpt wird, um zum späteren Abfüllen aufbewahrt zu werden.

2. Verfahren nach Anspruch 1, wobei die Kerntemperatur T1 im Temperaturbereich zwischen 70 °C und 95 °C liegt.

3. Verfahren nach den Ansprüchen 1 oder 2, wobei die Sterilisiertemperatur T2 zwischen 100 °C und 150 °C liegt, vorzugsweise zwischen 110 °C und 140 °C, am meisten bevorzugt zwischen 120 °C und 130 °C.

4. Verfahren nach einem der Ansprüche 1 bis 3, wobei die Sterilisierzeit t2 zwischen 1 und 10 Minuten liegt, vorzugsweise zwischen 2 und 8 Minuten, am meisten bevorzugt zwischen 3 und 6 Minuten.

5. Verfahren nach einem der Ansprüche 1 bis 4, wobei die Sterilisiertemperatur T2 zwischen 120 °C und 140 °C liegt und die Sterilisierzeit t2 zwischen 1 und 6 Minuten liegt.

6. Verfahren nach einem der Ansprüche 1 bis 5, wobei die Trägerflüssigkeit Wasser und gegebenenfalls mindestens eine weitere Komponente umfasst, die aus einer Liste ausgewählt ist, die Stabilisatoren, Stärkestabilisatoren, Zucker, Salze, Aromazusätze, Mehl und Gummi umfasst.

7. Verfahren nach einem der Ansprüche 1 bis 6, wobei die Trägerflüssigkeit Wasser, Stärkestabilisatoren, Mehle, Gummis, Salze und Zucker umfasst.

8. Anordnung zum Sterilisieren ganzer Nüsse umfassend eine Vorkocheinheit (1) und eine Sterilisierstrecke (2); wobei die Vorkocheinheit (1) konfiguriert ist, um die Nüsse für eine Zeit t1 bei einem Druck P1 auf eine Kerntemperatur T1 vorzukochen, wobei die Kerntemperatur T1 im Temperaturbereich zwischen 55 °C und 100 °C liegt; wobei die Sterilisierstrecke (2) konfiguriert ist, um die Nüsse durch Transportieren der Nüsse durch eine Abfolge von Verfahrensvorrichtungen zu sterilisieren, wobei die Abfolge von Verfahrensvorrichtungen in der Reihenfolge der Passage der Nüsse durch die Sterilisierstrecke (2) ein Reservoir (3), mindestens eine Förderpumpe (4), eine aufeinanderfolgende Anordnung von Wärmetauschern (5, 6, 7) und eine Abfüllmaschine (8) und/oder einen aseptischen Tank (9) umfasst; wobei die Anordnung ferner eine Steuereinheit umfasst, die operativ mit der Vorkocheinheit (1) und der Sterilisierstrecke (2) verbunden ist, wobei die Steuereinheit konfiguriert ist, um die Vorkocheinheit (1) und die Sterilisierstrecke (2) zu steuern zum:
a. Vorkochen der Nüsse in der Vorkocheinheit (1) für eine Zeit t1 bei einem Druck P1 auf eine Kerntemperatur T1, wobei die Kerntemperatur T1 im Temperaturbereich zwischen 55 °C und 100 °C liegt; und
b. Sterilisieren der Nüsse in der Sterilisierstrecke (2) durch
- Mischen der Nüsse in dem Reservoir (3) mit einer Trägerflüssigkeit, wobei die Trägerflüssigkeit mindestens Wasser umfasst, wodurch eine pumpbare, schlämmeartige Mischung aus Nüssen und Trägerflüssigkeit gebildet wird;
- Pumpen der schlämmeartigen Mischung unter Verwendung der mindestens einen Förderpumpe (4) durch die aufeinanderfolgende Anordnung von Wärmetauschern (5, 6, 7), wobei in einer ersten Anordnung von Wärmetauschern (5) die Trägerflüssigkeit auf eine Sterilisiertemperatur T2 erhitzt wird, und, wenn die Sterilisiertemperatur T2 erreicht ist, die Sterilisiertemperatur T2 durch eine zweite Anordnung von Wärmetauschern (6) für eine vorab festgelegte Sterilisierzeit t2 im Wesentlichen konstant gehalten wird, während die Nüsse sterilisiert werden, woraufhin die schlämmeartige Mischung durch eine dritte Anordnung von Wärmetauschern (7) gepumpt wird, wobei die schlämmeartige Mischung auf eine Lagertemperatur T3 gekühlt wird; und
- Pumpen der schlämmeartigen Mischung mit der Lagertemperatur T3 zu der Abfüllmaschine (8) zum Abfüllen oder zu dem aseptischen Tank (9) zum späteren Abfüllen.

9. Anordnung nach Anspruch 8, wobei die erste (5), die zweite (6) bzw. die dritte (7) Anordnung von Wärmetauschern jeweils mindestens einen Wärmetauscher umfasst, der ausgewählt ist zwischen einem Schabewärmetauscher, einem Röhrenwärmetauscher, einen Mantel-Rohr-Wärmetauscher, einem Plattenwärmetauscher, einem Rohrbündelwärmetauscher, einem adiabatischen Wärmerad und einem Lamellenwärmetauscher oder einer Kombination davon.

10. Anordnung nach Anspruch 8 oder Anspruch 9, wobei die erste, die zweite bzw. die dritte Anordnung von Wärmetauschern (5, 6, 7) jeweils mindestens einen Schabewärmetauscher umfasst.

11. Anordnung nach einem der Ansprüche 8 bis 10, wobei die zweite Anordnung von Wärmetauschern (6) mindestens einen Haltekanal (61, 63), vorzugsweise ein rohrförmiges Halterohr, umfasst.

12. Anordnung nach einem der Ansprüche 8 bis 11, wobei die zweite Anordnung von Wärmetauschern (6) eine abwechselnde Anordnung von Haltekanälen (61, 63), vorzugsweise rohrförmigen Halterohren, und Wärmetauschern (62, 63), vorzugsweise Schabewärmetauschern, umfasst.

13. Anordnung nach einem der Ansprüche 8 bis 12, wobei die Kerntemperatur T1 im Temperaturbereich zwischen 70 °C und 95 °C liegt.

14. Anordnung nach einem der Ansprüche 8 bis 13, wobei die Sterilisiertemperatur T2 zwischen 100 °C und 150 °C liegt, vorzugsweise zwischen 110 °C und 140 °C, am meisten bevorzugt zwischen 120 °C und 130 °C.

15. Anordnung nach einem der vorhergehenden Ansprüche 8 bis 14, wobei die Sterilisierzeit t2 zwischen 1 und 10 Minuten liegt, vorzugsweise zwischen 2 und 8 Minuten, am meisten bevorzugt zwischen 3 und 6 Minuten.

## Revendications

1. Procédé de stérilisation de noix entières comprenant
a. la précuisson desdites noix dans une unité de précuisson (1) à une température centrale T1 à une pression P1 pendant une durée t1, dans lequel ladite température centrale T1 se trouve dans la plage de température de 55 °C à 100 °C ;
b. le transfert desdites noix dans une ligne de stérilisation (2), ladite ligne de stérilisation (2) configurée pour transporter lesdites noix à travers des dispositifs de traitement successifs, lesdits dispositifs de traitement successifs comprenant un réservoir (3), au moins une pompe d'alimentation (4), un agencement consécutif d'échangeurs thermiques (5, 6, 7), et une machine de remplissage (8) et/ou une cuve aseptique (9) ; dans lequel
- lesdites noix sont mélangées dans ledit réservoir (3) avec un véhicule liquide, ledit véhicule liquide comprenant au moins de l'eau, formant ainsi un mélange de type suspension pompable de noix et de véhicule liquide ;
- ledit mélange de type suspension est pompé en utilisant ladite au moins une pompe d'alimentation (4) à travers ledit agencement consécutif d'échangeurs thermiques (5, 6, 7), dans lequel un premier agencement d'échangeurs thermiques (5) chauffe ledit véhicule liquide à une température de stérilisation T2 et, lorsque ladite température de stérilisation T2 est atteinte, ladite température de stérilisation T2 est maintenue sensiblement constante par un deuxième agencement d'échangeurs thermiques (6) pour une durée de stérilisation t2 prédéterminée alors que lesdites noix sont en cours de stérilisation, après quoi ledit mélange de type suspension est pompé à travers un troisième agencement d'échangeurs thermiques (7) pour refroidir ledit mélange de type suspension à une température de stockage T3 ; et
- ledit mélange de type suspension ayant ladite température de stockage T3 est pompé dans ladite machine de remplissage (8) pour le remplissage, ou dans ladite cuve aseptique (9) pour être conservé pour un remplissage ultérieur.

2. Procédé selon la revendication 1 dans lequel ladite température centrale T1 se trouve dans la plage de température de 70 °C à 95 °C.

3. Procédé selon les revendications 1 ou 2 dans lequel ladite température de stérilisation T2 est comprise entre 100 °C et 150 °C, de préférence entre 110 °C et 140 °C, de manière davantage préférée entre 120 C et 130 °C.

4. Procédé selon l'une quelconque des revendications 1 à 3 dans lequel ladite durée de stérilisation t2 est comprisée entre 1 et 10 minutes, de préférence entre 2 et 8 minutes, de manière préférée entre toutes entre 3 et 6 minutes.

5. Procédé selon l'une quelconque des revendications 1 à 4 dans lequel ladite température de stérilisation T2 est comprise entre 120°C et 140°C et ladite durée de stérilisation t2 est comprise entre 1 et 6 minutes.

6. Procédé selon l'une quelconque des revendications 1 à 5 dans lequel ledit véhicule liquide comprend de l'eau et facultativement au moins un autre composant sélectionné parmi une liste comprenant des stabilisateurs, des stabilisateurs à base d'amidon, des sucres, des sels, des additifs aromatiques, de la farine, et de la gomme.

7. Procédé selon une quelconque des revendications 1 à 6 dans lequel ledit véhicule liquide comprend de l'eau, des stabilisateurs à base d'amidon, des farines, des gommes, des sels et des sucres.

8. Agencement pour la stérilisation de noix entières comprenant une unité de précuisson (1), et une ligne de stérilisation (2) ; ladite unité de précuisson (1) configurée pour précuire lesdites noix à une température centrale T1 à une pression P1 pendant une durée t1, dans lequel ladite température centrale T1 se trouve dans la plage de température de 55 °C à 100 °C ; ladite ligne de stérilisation (2) configurée pour stériliser lesdites noix par transport desdites noix à travers des dispositifs de traitement successifs, lesdits dispositifs de traitement successifs comprenant dans l'ordre de passage desdites noix à travers ladite ligne de stérilisation (2), un réservoir (3), au moins une pompe d'alimentation (4), un agencement consécutif d'échangeurs thermiques (5, 6, 7), et une machine de remplissage (8) et/ou une cuve aseptique (9) ; ledit agencement comprenant en outre une unité de commande fonctionnellement raccordée à ladite unité de précuisson (1) et à ladite ligne de stérilisation (2), ladite unité de commande configurée pour commander ladite unité de précuisson (1) et ladite ligne de stérilisation (2) pour :
a. précuire lesdites noix dans ladite unité de précuisson (1) à une température centrale T1 à une pression P1 pendant une durée t1, dans lequel ladite température centrale T1 se trouve dans une plage de température comprise entre 55 °C et 100 °C ; et
b. stériliser lesdites noix dans ladite ligne de stérilisation (2) par
- mélange desdites noix dans ledit réservoir (3) avec un véhicule liquide, ledit véhicule liquide comprenant au moins de l'eau, formant ainsi un mélange de type suspension pompable de noix et de véhicule liquide ;
- pompage dudit mélange de type suspension en utilisant ladite au moins une pompe d'alimentation (4) à travers lesdits agencements consécutifs d'échangeurs thermiques (5, 6, 7), où dans un premier agencement d'échangeurs thermiques (5) ledit véhicule liquide est chauffé à une température de stérilisation T2 et, lorsque ladite température de stérilisation T2 est atteinte, ladite température de stérilisation T2 est maintenue sensiblement constante par un deuxième agencement d'échangeurs thermiques (6) pour une durée de stérilisation t2 prédéterminée alors que lesdites noix sont en cours de stérilisation, après quoi ledit mélange de type suspension est pompé à travers un troisième agencement d'échangeurs thermiques (7) dans lequel ledit mélange type suspension est refroidi à une température de stockage T3 ; et
- pompage dudit mélange de type suspension ayant ladite température de stockage T3, dans ladite machine de remplissage (8) pour le remplissage, ou dans ladite cuve aseptique (9) pour être conservé pour un remplissage ultérieur.

9. Agencement selon la revendication 8 dans lequel ledit premier (5), ledit deuxième (6), et ledit troisième (7) agencement d'échangeurs thermiques comprennent respectivement au moins un échangeur thermique choisi parmi un échangeur thermique à surface raclée, un échangeur thermique tubulaire, un échangeur thermique à tubes et à calandre, un échangeur thermique à plaques, un échangeur thermique à plaques et à calandre, un échangeur thermique à roue adiabatique, et un échangeur thermique à plaques-ailettes, ou une combinaison de ceux-ci.

10. Agencement selon la revendication 8 ou la revendication 9 dans lequel ledit premier, ledit deuxième, ledit troisième agencement d'échangeurs thermiques (5, 6, 7) comprennent respectivement au moins un échangeur thermique à surface raclée.

11. Agencement selon l'une quelconque des revendications 8 à 10 dans lequel ledit deuxième agencement d'échangeurs thermiques (6) comprend au moins un conduit de chambrage (61, 63) de préférence un conduit de chambrage tubulaire.

12. Agencement selon l'une quelconque des revendications 8 à 11 dans lequel ledit agencement d'échangeurs thermiques (6) comprend un agencement alterné de conduits de chambrage (61, 63), de préférence des tubes de chambrage tubulaires, et des échangeurs thermiques (62, 63), de préférence des échangeurs thermiques à surface raclée.

13. Agencement selon l'une quelconque des revendications 8 à 12 dans lequel la température centrale T1 se trouve dans la plage de température de 70 °C à 95 °C.

14. Agencement selon l'une quelconque des revendications 8 à 13 dans lequel ladite température de stérilisation T2 est comprises entre 100 °C et 150 °C, de préférence 110 °C à 140 °C, de manière davantage préférée entre 120 °C et 130 °C.

15. Agencement selon l'une quelconque des revendications précédentes 8 à 14, dans lequel ladite durée de stérilisation t2 est comprise entre 1 et 10 minutes, de préférence entre 2 et 8 minutes, de manière préférée entre toutes entre 3 et 6 minutes.
